# EUROPEAN PATENT APPLICATION

(11) **EP 4 707 071 A1**
(43) Date of publication of application: **11.03.2026**
(21) Application number: 25196501.8
(22) Date of filing: 18.08.2025
(51) Int. Cl.: B60N 2/865, B60N 2/879, B60N 2/90

(54) **NECK SUPPORT AND VEHICLE SEAT HEADREST**

(30) Priority: 19.08.2024 CN 202411134072; 29.09.2024 CN 202411371807
(71) Applicant: Adient (Chongqing) Automotive Components Co., Ltd., Liangjiang New Area, Chongqing 401122 (CN)
(72) Inventor: XIN, Yi, Chongqing, 401122 (CN); LI, Qingmao, Chongqing, 401122 (CN); JIA, Wei, Chongqing, 401122 (CN); DENG, Xingyuan, Chongqing, 401122 (CN); HU, Zhongren, Chongqing, 401122 (CN)
(74) Representative: Liedtke & Partner Patentanwälte

(57) **Abstract**

Disclosed in the present invention are a neck support and a vehicle seat headrest. The neck support comprises a main mounting frame and a support assembly. The main mounting frame is used to be integrated in a headrest. The main mounting frame is provided with a through hole extending in a front-rear direction of the headrest. A front portion of the support assembly is used to support an occupant's neck, and a rear portion of the support assembly is slidably assembled in the through hole. An airbag is provided between the main mounting frame and the support assembly. The airbag is connected to an air supply component. The air supply component is used to inflate and deflate the airbag. The airbag is inflated and expanded to push the support assembly to move forward. The airbag is deflated and contracted to pull the support assembly to move rearward. The beneficial effect of the present invention is that the support assembly can slide forward and rearward relative to the main mounting frame by inflating and deflating the airbag, thereby realising the front-rear adjustment of the neck support, so that the needs of different occupants for the neck support can be met.

## Description

### Technical Field

The present invention relates to the technical field of vehicle seat neck supports, in particular to a neck support and a vehicle seat headrest.

### Background Art

A neck support is a functional component integrated into the top of a vehicle seat or the bottom of a headrest. It is mainly used to support the necks of drivers and passengers. It can effectively prevent the neck from being unsupported and affecting comfort during long-term driving or riding.

In the prior art, neck supports are mostly fixed members and cannot be adjusted. Although today's headrests have the function of forward and rearward adjustment, when the neck support is integrated into the lower portion of the headrest, the distance between the neck support and the headrest remains fixed. However, the distance between the back of the neck and the back of the head of each occupant is different. Therefore, the existing neck supports are difficult to adapt to the personalised needs of different users, and their comfort needs to be optimised and upgraded.

### Summary of the Invention

In view of this, one of the objectives of the present invention is to provide a neck support, which is intended to enable the neck support to be adjusted independently and freely forward and rearward to meet the needs of different users.

In order to achieve the above objective, the technical solution of the present invention is as follows:
A neck support, comprising a main mounting frame and a support assembly, wherein the main mounting frame is used to be integrated in a headrest, the main mounting frame is provided with a through hole extending in a front-rear direction of the headrest, a front portion of the support assembly is used to support an occupant's neck, and a rear portion of the support assembly is slidably assembled in the through hole, characterised in that: an airbag is provided between the main mounting frame and the support assembly; the airbag is connected to an air supply component; the air supply component is used to inflate and deflate the airbag; the airbag is inflated and expanded to push the support assembly to move forward; and the airbag is deflated and contracted to pull the support assembly to move rearward.

With the above structure, the support assembly can slide forward and rearward relative to the main mounting frame by inflating and deflating the airbag, thereby achieving the effect of adjusting the neck support forward and rearward. The overall structure is very simple.

Preferably, the support assembly comprises a sliding component, a support body and a surface cover covering a surface of the support body, the sliding component has a sliding rod extending rearward, and the sliding rod is slidably arranged in the through hole. With the above structure, the front and rear adjustment of the neck support is achieved by sliding the sliding rod in the through hole.

Preferably, a front end of the support body is of an arc-shaped structure, two massage airbags are symmetrically arranged at middle positions of the front end of the support body, and the massage airbags are connected to the air supply component. With the above structure, the design of the arc-shaped structure is more convenient for supporting the neck of the occupant, and the massage airbags can be inflated and deflated to massage the neck of the occupant.

Preferably, the through hole is a rectangular hole, the sliding rod is configured as a rectangular rod adapted to the through hole, a limiting protrusion is provided at a rear end of the sliding rod, the limiting protrusion protrudes from a side portion of the sliding rod, and a guiding inclined surface is provided at a rear end of the limiting protrusion. With the above structure, the provided limiting protrusion can prevent the main mounting frame and the support assembly from being separated, and the guiding inclined surface facilitates the installation of the support assembly.

Preferably, the main mounting frame has a groove structure with an open front end, the sliding component is provided with a mounting portion extending rearward into the groove structure, and the airbag is circumferentially configured to be a telescopic foldable shape, having one end connected to a bottom of the groove structure and the other end connected to a rear end of the mounting portion. With the above structure, the airbag can be inflated and deflated in the groove structure, thereby ensuring that the neck support is more stable when it is extended and retracted. The airbag is circumferentially configured to be a telescopic foldable shape, which ensures that the airbag can expand and contract in a directed manner during inflation and deflation.

Preferably, the groove structure has a cross section adapted to that of the airbag, a first mounting hole is provided at the bottom of the groove structure, and the first mounting hole is used to allow an air tube connecting the airbag and the air supply component to pass through. With the above structure, the provided first mounting hole can facilitate the installation of the air tube, thereby making the overall structure more compact.

Preferably, the main mounting frame is provided with two through holes, and the two through holes are symmetrically arranged on left and right sides of the groove structure. With the above structure, it is further ensured that the neck support can be adjusted by sliding forward and rearward more stably.
Preferably, a mounting groove is extended rearward from a middle position of the front end of the support body, the massage airbags are arranged in the mounting groove, and two second mounting holes are symmetrically provided on the mounting groove, and the second mounting holes are used to allow air tubes between the massage airbags and the air supply component to pass through. With the above structure, the overall thickness of the support assembly can be reduced by the provided mounting groove, and the provided second mounting holes also further make the overall structure of the neck support more compact.

Preferably, a distal end of the airbag is connected to an emergency exhaust valve, and the emergency exhaust valve is independently controlled by a vehicle passive safety system. With the above structure, it is ensured that the airbag can collapse when the vehicle collides, thereby reducing injuries to the occupant's neck and head.

A second objective of the present invention is to provide a vehicle seat headrest.

A vehicle seat headrest, characterised in that the vehicle seat headrest comprises the neck support according to any one of Claims 1 to 9.

Compared with the prior art, the present invention has the following beneficial effects:
1. When the neck support and the vehicle seat headrest provided by the present invention are used, the support assembly is slidably mounted on the main mounting frame, and the airbag is arranged between the support assembly and the main mounting frame. By inflating and deflating the airbag, the support assembly can slide forward and rearward relative to the main mounting frame, thereby achieving independent forward and rearward adjustment of the neck support relative to the headrest, meeting the support requirements of different occupants for the neck support and providing better comfort.
2. By configuring the support body as an arc-shaped structure and additionally mounting two massage airbags at the front end of the support body, the neck support can not only support the occupant's neck well but also massage the occupant's neck.
3. The additionally provided emergency exhaust valve can deflate the airbag when the vehicle collides, causing the neck support to collapse, thereby reducing injuries to the occupant's neck and head.

### Brief Description of the Drawings

Fig. 1 is a schematic view of the three-dimensional structure of a neck support in a retracted state;
Fig. 2 is a schematic view of the three-dimensional structure of the neck support in an extended state;
Fig. 3 is an exploded schematic view of a support assembly A;
Fig. 4 is a schematic structural view of a main mounting frame 1;
Fig. 5 is a partial enlarged schematic view of a rear end of a sliding rod 3a;
Fig. 6 is a schematic structural view of a rear end of a support body 4;
Fig. 7 is a cross-sectional schematic view showing an installation position relationship of an airbag 2;
Fig. 8 is a schematic view showing an air circuit connection of the airbag 2, massage airbags 6 and an air supply component 9;
Fig. 9 is a schematic structural view of a vehicle seat headrest in a retracted state of the neck support; and
Fig. 10 is a schematic structural view of the vehicle seat headrest in an extended state of the neck support.

### Detailed Description of the Embodiments

The present invention will be further described below with reference to embodiments and drawings.

### Embodiment 1:

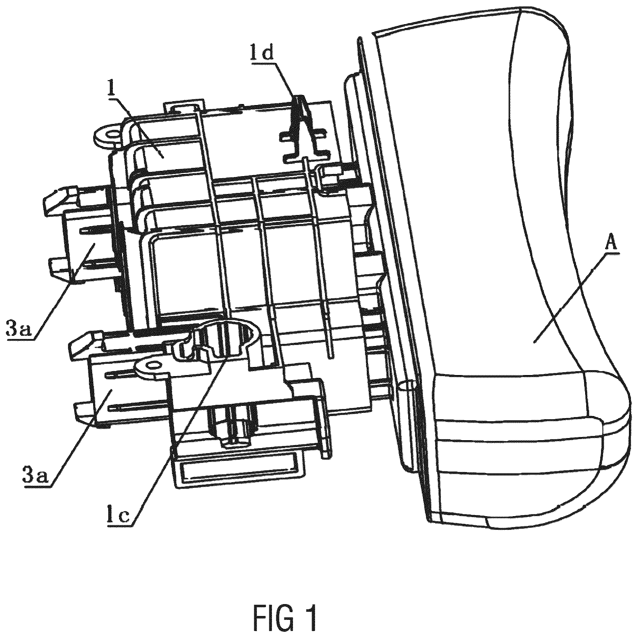

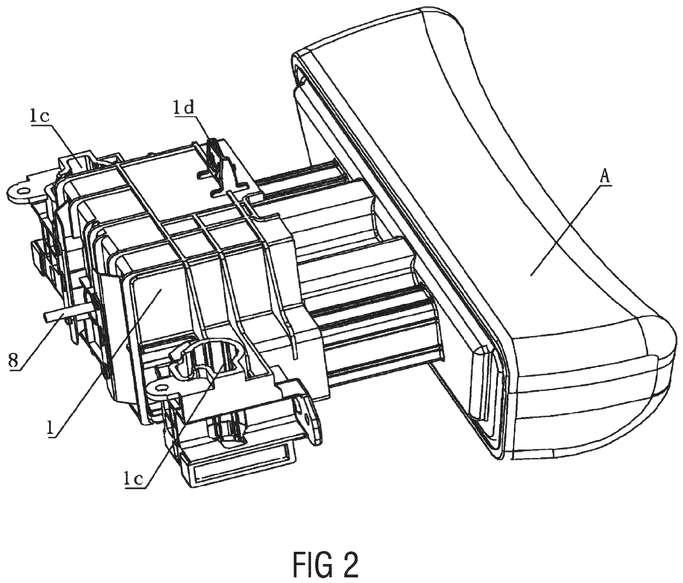

As shown in Figs. 1, 2, 4 and 8, a neck support comprises a main mounting frame 1 and a support assembly A. The main mounting frame 1 is used to be integrated in a headrest. A through hole 1a is formed on the main mounting frame 1 along the front-rear direction of the headrest. The front portion of the support assembly A is used to support the neck of an occupant, and the rear portion is slidably assembled in the through hole 1a. An airbag 2 is further mounted between the main mounting frame 1 and the support assembly A. The airbag 2 is connected to an air supply component 9 through an air tube 8. In this embodiment, an air pump is selected and used as the air supply component 9, and the air supply component 9 is used to inflate and deflate the airbag 2. The airbag 2 is inflated and expanded to push the support assembly A forward, and the airbag 2 is deflated and contracted to pull the support assembly A rearward.

With such a design, the airbag 2 is inflated and deflated by the air supply component 9, so that the support assembly A can slide forward and rearward relative to the through hole 1a, thereby achieving the purpose of adjusting the neck support forward and rearward, and meeting the needs of different occupants for the neck support.

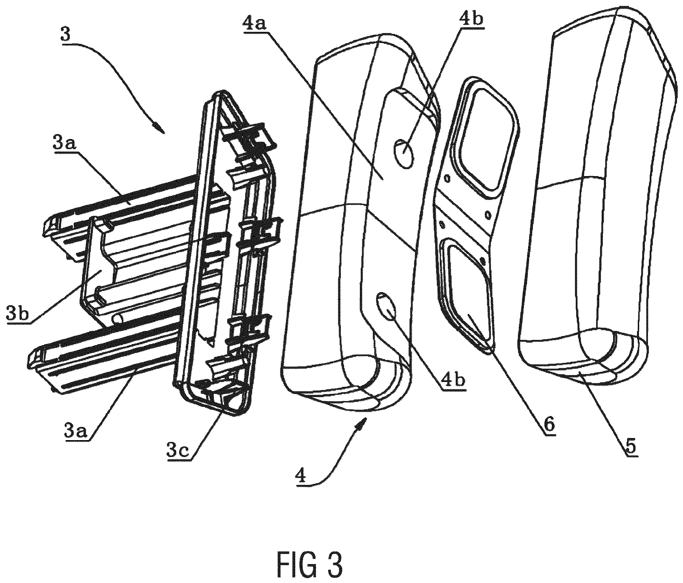

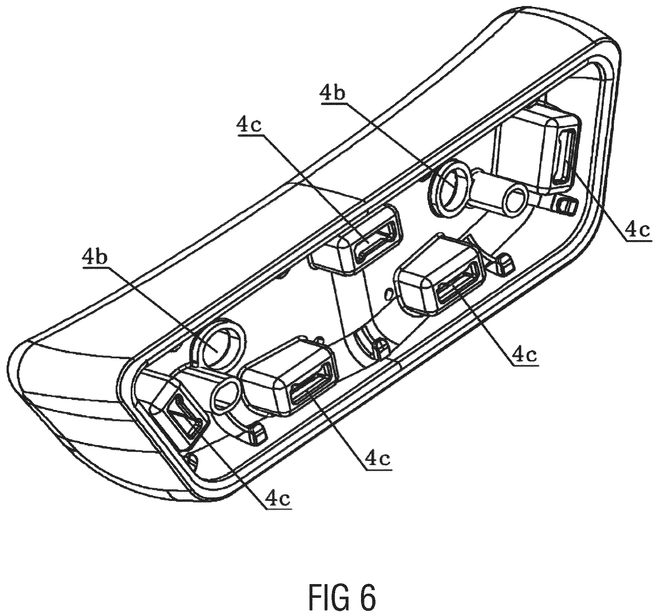

As shown in Figs. 3 and 6, the support assembly A comprises a sliding component 3, a support body 4 and a surface cover 5 covering the surface of the support body 4, wherein the sliding component 3 has a sliding rod 3a extending rearward, and the support assembly A is slidably arranged in the through hole 1a via the sliding rod 3a. In this embodiment, a lock buckle 3c is formed at the front end of the sliding component 3, and a lock hole 4c is formed at the rear end of the support body 4. By inserting the lock buckle 3c into the lock hole 4c, the sliding component 3 and the support body 4 are fixedly mounted.

Further, as shown in Fig. 3, the front end of the support body 4 is of an arc-shaped structure. Such a design can better support the neck of the occupant. A mounting groove 4a is formed at a middle position of the front end of the support body 4. Two massage airbags 6 are symmetrically mounted on the left and right sides inside the mounting groove 4a. Second mounting holes 4b are further formed on the mounting groove 4a. The interior of the second mounting hole 4b is mainly used for allowing an air tube 8 to pass through. The massage airbag 6 is connected to the air supply component 9 through the air tube 8, and the massage airbag 6 is inflated and deflated by the air supply component 9 so that a massage effect on the occupant's neck can be achieved.

In this embodiment, through the combined design of the airbag 2 and the massage airbags 6, the occupant's neck can be supported on the support assembly A in a non-completely rigid manner, and there is a certain degree of flexibility, further ensuring the overall comfort of the occupant.

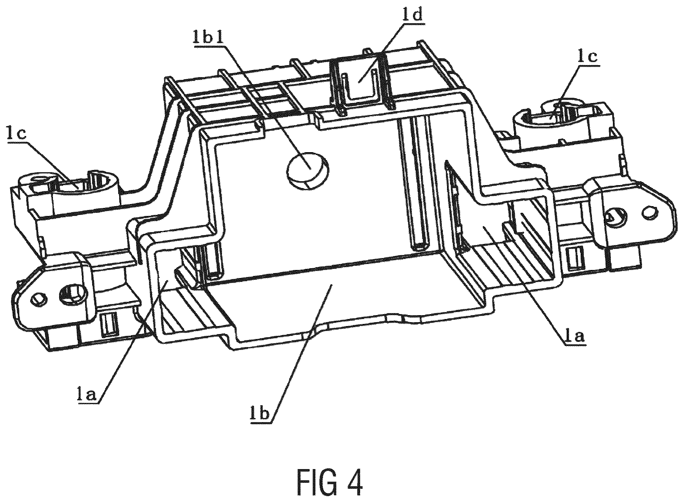

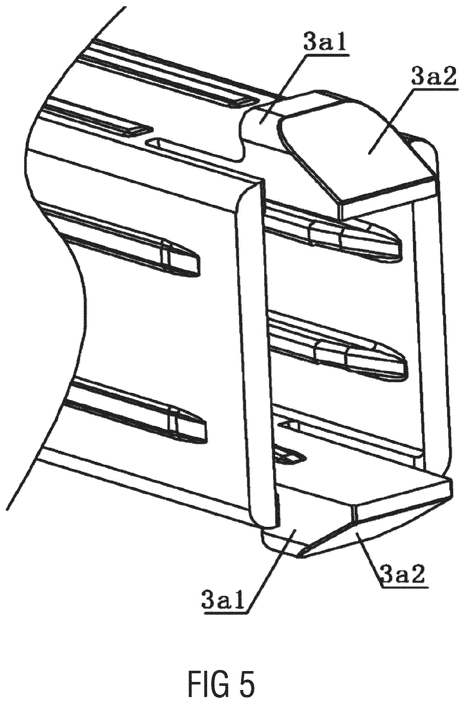

As shown in Figs. 4 and 5, in this embodiment, the through hole 1a is configured as a rectangular hole, and the sliding rod 3a is also configured as a rectangular rod adapted to the through hole 1a. Moreover, limiting protrusions 3a1 extend forward on both the upper and lower sides of the rear end of the sliding rod 3a. The limiting protrusion 3a1 can effectively prevent the support assembly A from detaching from the main mounting frame 1, and a guiding inclined surface 3a2 is provided at the rear end of the limiting protrusion 3a1, thereby facilitating the installation of the support assembly A on the main mounting frame 1.

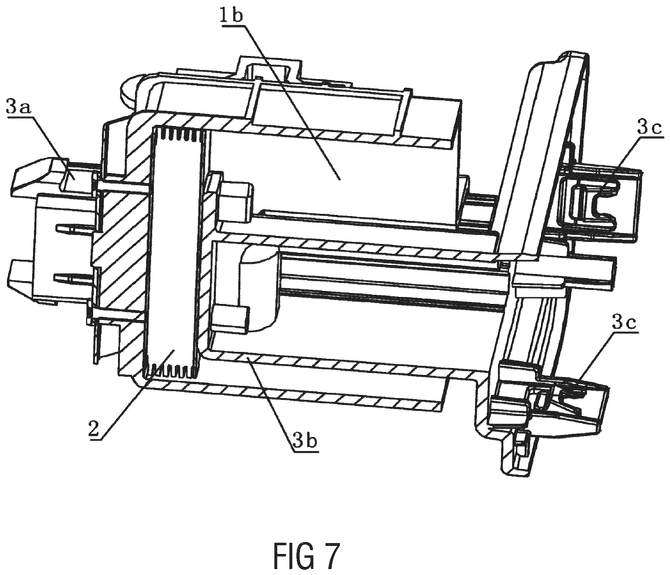

As shown in Figs. 4 and 7, a groove structure 1b with an open front end is formed at a middle position of the main mounting frame 1. The cross section of the groove structure 1b is adapted to the cross section of the airbag 2. In this embodiment, the cross sections of the groove structure 1b and the airbag 2 are both rectangular structures. The rear end of the airbag 2 is fixedly connected to the innermost side of the groove structure 1b. A mounting portion 3b extending rearward is formed at a middle position of the rear end of the sliding component 3. The front end of the airbag 2 is fixedly connected to the rear side of the mounting portion 3b. In this embodiment, the airbag 2 is fixedly connected between the main mounting frame 1 and the support assembly A by bolts. A first mounting hole 1b1 is formed at a central position of the rear side of the groove structure 1b. The first mounting hole 1b1 is used to allow the air tube 8 to pass through, so as to facilitate the connection between the airbag 2 and the air supply component 9.

As shown in Fig. 7, in this embodiment, the airbag 2 is circumferentially configured to be a telescopic foldable shape, thereby ensuring that the expansion and contraction directions of the airbag 2 are fixed when the airbag is inflated and deflated. When the airbag 2 is full, the extended length of the airbag 2 is consistent with the depth of the groove structure 1b. Thus, it can be ensured that the airbag 2 is supported in the circumference during the inflation and deflation process, thereby ensuring that the support assembly A can slide forward and rearward more stably.

In order to further ensure that the support assembly A slides more stably relative to the main mounting frame 1, in this embodiment, two through holes 1a are formed in the main mounting frame 1, and the two through holes 1a are symmetrically arranged on the left and right sides of the groove structure 1b. The sliding component 3 has a sliding rod 3a extending rearward corresponding to each through hole 1a.

As shown in Fig. 4 again, third mounting holes 1c distributed along a vertical direction are formed on the left and right sides of the main mounting frame 1. The third mounting holes 1c are mainly used for allowing a mounting guide rod 11 between the vehicle headrest and the vehicle seat to pass through. A mounting buckle 1d is also formed upward at a middle position of the top of the main mounting frame 1. The mounting buckle 1d is used for being fixedly connected to the bottom of the vehicle headrest.

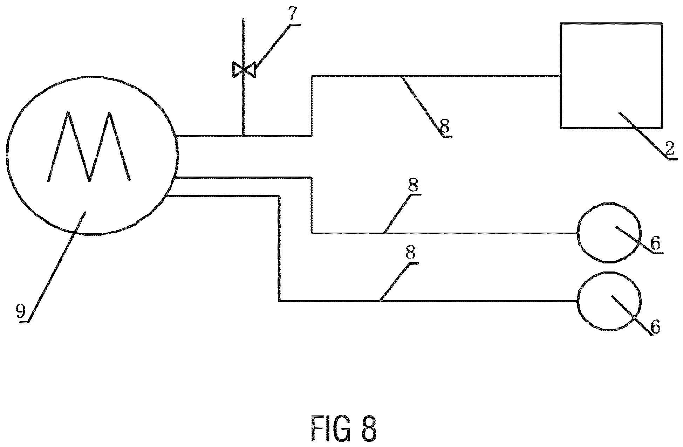

As shown in Fig. 8, in this embodiment, a distal end of the airbag 2 is also connected to an emergency exhaust valve 7 through an air tube 8. The emergency exhaust valve 7 is independently controlled by a vehicle passive safety system. Under normal circumstances, the emergency exhaust valve 7 is in a closed state. When an emergency such as a collision occurs in the vehicle, the vehicle passive safety system controls the emergency exhaust valve 7 to open, and the airbag 2 can be exhausted, thereby enabling the support assembly A to collapse rearward, which can effectively reduce the impact force on the occupant's neck and head and ensure the safety of the occupant.

### Embodiment 2:

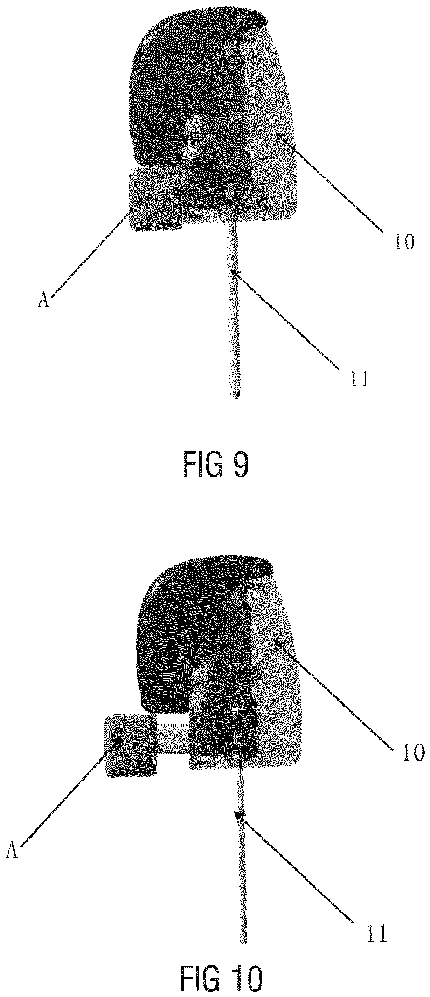

As shown in Figs. 9 and 10, a vehicle seat headrest mainly comprises a headrest body 10, wherein the neck support mechanism with the adjustable airbag described in Embodiment 1 is fixedly mounted at the lower end of the interior of the headrest body 10. In this embodiment, the neck support mechanism with the adjustable airbag is clamped to the bottom of the headrest body 10 through the mounting buckle 1d provided at the top of the main mounting frame 1 to achieve fixed installation between the headrest body 10 and the neck support mechanism with the adjustable airbag. With such a design, the front-rear distance between the headrest body 10 and the support assembly A can be changed by inflating and deflating the airbag 2, thereby meeting the neck support needs of different occupants.

Finally, it should be noted that only preferred embodiments of the present invention have been described above. In light of the present invention, those of ordinary skill in the art can make various similar expressions without departing from the spirit and claims of the present invention, and such changes all fall within the scope of protection of the present invention.

## Claims

1. Neck support, comprising a main mounting frame (1) and a support assembly (A), wherein the main mounting frame (1) is used to be integrated in a headrest, the main mounting frame (1) is provided with a through hole (1a) extending in a front-rear direction of the headrest, a front portion of the support assembly (A) is used to support an occupant's neck, and a rear portion of the support assembly (A) is slidably assembled in the through hole (1a), **characterised in that**: an airbag (2) is provided between the main mounting frame (1) and the support assembly (A); the airbag (2) is connected to an air supply component (9); the air supply component (9) is used to inflate and deflate the airbag (2); the airbag (2) is inflated and expanded to push the support assembly (A) to move forward; and the airbag (2) is deflated and contracted to pull the support assembly (A) to move rearward.

2. Neck support according to Claim 1, **characterised in that**: the support assembly (A) comprises a sliding component (3), a support body (4) and a surface cover (5) covering a surface of the support body (4), the sliding component (3) has a sliding rod (3a) extending rearward, and the sliding rod (3a) is slidably arranged in the through hole (1a).

3. Neck support according to Claim 1 or 2, **characterised in that**: a front end of the support body (4) is of an arc-shaped structure, two massage airbags (6) are symmetrically arranged at middle positions of the front end of the support body (4), and the massage airbags (6) are connected to the air supply component (9).

4. Neck support according to Claim 2 or 3, **characterised in that**: the through hole (1a) is a rectangular hole, the sliding rod (3a) is configured as a rectangular rod adapted to the through hole (1a), a limiting protrusion (3a1) is provided at a rear end of the sliding rod (3a), the limiting protrusion (3a1) protrudes from a side portion of the sliding rod (3a), and a guiding inclined surface (3a2) is provided at a rear end of the limiting protrusion (3a1).

5. Neck support according to any one of the preceding Claims 2 to 4, **characterised in that**: the main mounting frame (1) has a groove structure (1b) with an open front end, the sliding component (3) is provided with a mounting portion (3b) extending rearward into the groove structure (1b), and the airbag (2) is circumferentially configured to be a telescopic foldable shape, having one end connected to a bottom of the groove structure (1b) and the other end connected to a rear end of the mounting portion (3b).

6. Neck support according to Claim 5, **characterised in that**: the groove structure (1b) has a cross section adapted to that of the airbag (2), a first mounting hole (1b1) is provided at the bottom of the groove structure (1b), and the first mounting hole (1b1) is used to allow an air tube connecting the airbag (2) and the air supply component to pass through.

7. Neck support according to Claim 5 or 6, **characterised in that**: the main mounting frame (1) is provided with two through holes (1a), and the two through holes (1a) are symmetrically arranged on left and right sides of the groove structure (1b).

8. Neck support according to any one of the preceding Claims 3 to 7, **characterised in that**: a mounting groove (4a) is extended rearward from a middle position of the front end of the support body (4), the massage airbags (6) are arranged in the mounting groove (4a), and two second mounting holes (4b) are symmetrically provided on the mounting groove (4a), and the second mounting holes (4b) are used to allow air tubes between the massage airbags (6) and the air supply component (9) to pass through.

9. Neck support according to any one of the preceding Claims 1 to 8, **characterised in that**: a distal end of the airbag (2) is connected to an emergency exhaust valve (7), and the emergency exhaust valve (7) is independently controlled by a vehicle passive safety system.

10. Vehicle seat headrest, **characterised in that** the vehicle seat headrest comprises the neck support according to any one of Claims 1 to 9.
